# EUROPÄISCHE PATENTSCHRIFT

(11) **EP 0 489 241 B1**
(45) Veröffentlichungstag und Bekanntmachung des Hinweises auf die Patenterteilung: **28.06.1995**
(21) Anmeldenummer: 91117167.6
(22) Anmeldetag: 09.10.1991
(51) Int. Cl.: B01D 53/08, B01D 46/34, B01J 8/12, B01J 8/10

(54) **Vorrichtung zum Behandeln von Substanzen in einem Gasstrom**
Apparatus for treating substances in a gas stream
Dispositif pour traiter des substances dans un courant gazeux

(30) Priorität: 03.11.1990 DE 9015157 U
(43) Veröffentlichungstag der Anmeldung: 10.06.1992
(73) Patentinhaber: BÜECHL HANDELS- und VERMÖGENSVERWALTUNGS-KG, D-93055 Regensburg (DE)
(72) Erfinder: Sgaslik, Fritz, W-8733 Bad Bocklet (DE)
(74) Vertreter: Graf, Helmut, Dipl.-Ing.

(56) Entgegenhaltungen:
- EP-A- 0 119 298
- EP-A- 0 211 343
- FR-A- 2 347 962
- GB-A- 2 067 918

## Beschreibung

Die Erfindung bezieht sich auf eine Vorrichtung zum Behandeln von Substanzen in einem Gasstrom entsprechend dem Oberbegriff des Patentanspruches 1.

Eine Vorrichtung dieser Art ist bekannt (EP-A-0.211.343 bzw. DE-A-3.527.187). Bei dieser bekannten Vorrichtung ist die innere Kammer die erste Kammer, die zum Zuführen des Gases dient, während die zweite Kammer zum Abführen des Gases die äußere, ringförmige Kammer ist.

Bei dieser bekannten Konstruktion ist bei Betriebsstörungen insbesondere im Bereich der Abräumvorrichtungen oder anderer Elemente zum Abführen des Behandlungsmediums in der Regel ein Abschalten der Vorrichtung notwendig.

Aufgabe der Erfindung ist es, die bekannte Vorrichtung hinsichtlich ihrer Arbeits- und Betriebsweise zu verbessern.

Zur Lösung dieser Aufgabe ist eine Vorrichtung der eingangs geschilderten Art erfindungsgemäß entsprechend der Kennzeichnung des Patentanspruches 1 ausgebildet.

Bei der erfindungsgemäßen Vorrichtung durchströmt das Gas die Behandlungsräume von der äußeren ringförmigen ersten Kammer an die zweite, innere Kammer, womit eine auch in bezug auf den effektiven Strömungsquerschnitt für eine Behandlung optimale Durchströmung der Behandlungsräume erzielt wird. Mit der erfindungsgemäßen Vorrichtung, die bevorzugt ein Filter zum Reinigen von Gasen unter Verwendung eines aus festen Partikeln bestehenden Filtermediums ist, lassen sich somit im Vergleich zur bekannten Vorrichtung wesentlich verbesserte Behandlungs- bzw. Filterergebnisse erreichen.

Durch die Ausbildung der äußeren Kammer als erste Kammer, in der dann auch die Abräumvorrichtungen für das Behandlungsmedium vorgesehen sind, ist es insbesondere auch möglich, die Vorrichtung so auszubilden, daß diese Abräumvorrichtungen sowie andere Elemente, die zum Abführen des Behandlungsmediums dienen, radial von außen leicht zugänglich sind, und zwar sogar während des Betriebes der Vorrichtung. In diesem Bereich auftretende Störungen, wie sie beispielsweise bei einer Taupunkt-Unterschreitung bei einem Filter durch Verkleben des Behandlungsmediums auftreten können, lassen sich dann ohne Schwierigkeiten beheben. Weiterhin sind auch Reparatur- und Austauscharbeiten insbesondere im Bereich der Abräumvorrichtungen oder anderer Elemente zum Abführen oder Ausräumen des Behandlungsmediums von außen her leicht und gefahrlos durchführbar.

Weiterbildungen der Erfindung sind Gegenstand der Unteransprüche.

Die Erfindung wird im folgenden anhand der Figuren an einem Ausführungsbeispiel in Form eines Filters näher erläutert. Es zeigen:
- Fig. 1: einen Längsschnitt durch ein Filter gemäß der Erfindung;
- Fig. 2: einen Querschnitt entsprechend der Schnittlinie I-I der Fig. 1.

Das dargestellte Filter besteht aus einem Gehäuse 1 mit einer zylinderförmigen Außen- bzw. Umfangswand 2 und ist mit nicht näher dargestellten Stützelementen oder Füßen so gehalten, daß die Zylinder- bzw. Symmetrieachse S des Gehäuses 1 sich in vertikaler Richtung erstreckt. Das Gehäuse 1 ist an seiner Oberseite durch eine Decke 3 und an seiner Unterseite im wesentlichen durch einen Bodenbereich 4 verschlossen.

Im Inneren des Gehäuses sind konzentrisch zur Symmetrieachse S übereinander mehrere ringförmig, sich jeweils nach unten hin verengende Behandlungs- bzw. Filterräume 5 (Ringetagen) vorgesehen, und zwar in einer Weise, daß diese Behandlungsräume in ihrer Gesamtheit den Innenraum des Gehäuses 1 in zwei Kammern unterteilen, nämlich in eine äußere ringförmige Kammer 6 sowie in eine innere, im wesentlichen zylinderförmige Kammer 7. Die Kammer 6 ist nach außen hin durch die Umfangswand 2 und nach innen hin durch die übereinander angeordneten Behandlungsräume 5 begrenzt. Die innere Kammer 7 ist nach außen hin durch die übereinander angeordneten Behandlungsräume 5 abgeschlossen.

Bei der dargestellten Ausführungsform ist jeder Behandlungsraum 5 bezogen auf die Symmetrieachse S radial nach außen durch zwei, die Symmetrieachse S jeweils konzentrisch umschließende und in Richtung dieser Symmetrieachse gegeneinander versetzte Wände 8 und 9 begrenzt, von denen die jeweils obere ringförmige Wand 8 einen kleineren Durchmesser aufweist als die darunter liegende ringförmige Wand 9. Zur inneren Kammer 7 hin sind die einzelnen Behandlungsräume 5 durch Wände 10 begrenzt, die jeweils von Ringen gebildet sind, welche sich nach unten hin kegelförmig erweitern. Jeder Wand 10 ist eine Wand 11 zugeordnet, die ebenfalls von einem sich nach unten hin kegelstumpfförmig erweiternden Ring gebildet ist, wobei die axiale Länge des die jeweilige Wand 11 bildenden Ringes in Richtung der Symmetrieachse S kürzer ist als die entsprechende axiale Länge des die zugehörige Wand 10 bildenden Ringes. Die Anordnung ist dabei weiterhin so getroffen, daß jede Wand 11 mit Abstand unterhalb der zugehörigen Wand 10 und parallel zu dieser vorgesehen ist, wobei der obere Rand jeder Wand 10 und der zugehörigen Wand 11 in etwa auf einer gemeinsamen Höhe liegen. Im Bereich des obersten Behandlungsraumes 5 ist eine Wand 12 vorgesehen, die den Wänden 10 im wesentlichen entspricht und der dann die Wand 11 zugeordnet ist.

Zwischen jeweils einer Wand 10 und der darunter liegenden Wand 11 ist ein die Symmetrieachse S konzentrisch umschließender Ringkanal 13 zum Zuführen des Behandlungs-bzw. Filtermediums an die einzelnen Behandlungsräume 5 gebildet. Ein Ringkanal 13 ist auch zwischen der Wand 12 des obersten Behandlungsraumes und der darunter liegenden Wand 11 gebildet.

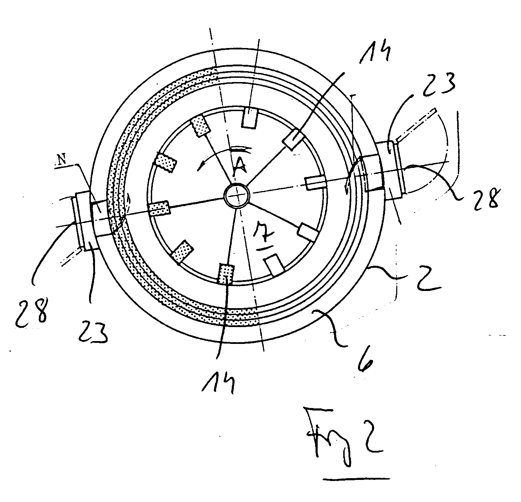

An ihrem oben liegenden, offenen Ende reichen die Ringkanäle 13 jeweils in mehrere Kanäle 14 hinein, die mit ihrer Längserstreckung parallel zur Symmetrieachse S, gegenüber dieser jedoch radial nach außen versetzt angeordnet sind, und zwar in gleichmäßigen Winkelabständen um die Symmetrieachse S verteilt. Die Kanäle 14, die an ihrem unteren Ende verschlossen und radial innerhalb der Behandlungsräume 5 vorgesehen sind, münden an ihrem oberen Ende in einen gemeinsamen, die Symmetrieachse S konzentrisch umschließenden ringartigen Vorratsbehälter 16 für das Behandlungsmedium 15. Der Vorratsbehälter 16 besteht im wesentlichen aus einer die Symmetrieachse S konzentrisch umschließenden hohlzylinderartigen Umfangs- bzw. Außenwand 17 und aus einer Innenwand 18, die von einem sich nach unten hin erweiternden, die Symmetrieachse S konzentrisch umschließenden kegelstumpfförmigen Ring gebildet ist. Die Innenwand 18 schließt auch die innere Kammer 7 nach oben hin ab. Es versteht sich, daß der an seiner Oberseite offene Vorratsbehälter 16 an seiner Unterseite lediglich mit den Kanälen 14 in Verbindung steht und jeweils zwischen zwei benachbarten Kanälen 14 an seiner Unterseite durch einen kreisbogenförmigen Wandabschnitt verschlossen ist. Weiterhin versteht es sich, daß auch die Kanäle 14 zur inneren Kammer 7 hin verschlossen sind. Jeder Filter- bzw. Behandlungsraum besitzt weiterhin eine ringförmige Wand 19, die in einer Ebene senkrecht zur Symmetrieachse S angeordnet ist und sich mit Abstand unterhalb des unteren Endes der zugehörigen Wand 9 und 10 des jeweiligen Behandlungsraumes 5 befindet, und zwar mit dem innen liegenden Rand gegenüber dem unteren Rand der darüber liegenden Wand 10 etwas radial nach innen versetzt und mit dem außen liegenden Rand radial gegenüber der darüber liegenden Wand 9 radial nach außen versetzt. Die Filterräume 5 mit ihren Wänden 10, 11, 12 und 19, die Kanäle 14, der Vorratsbehälter 16 sowie weitere, die innere Kammer 7 von der äußeren Kammer 6 trennende Wandelemente bilden eine bauliche Einheit bzw. einen Rotor 20, der an einer achsgleich mit der Symmetrieachse S liegenden Welle 21 vorgesehen ist. Die Welle 21 ist an der Decke 3 sowie am Bodenbereich 4 um die Symmetrieachse S drehbar gelagert. Mit einem Antrieb 22 kann die Welle 21 und damit der Rotor 20 insgesamt um die Symmetrieachse S rotierend angetrieben werden, wie dies in der Fig. 2 mit dem Pfeil A angedeutet ist.

An der Außenfläche der Umfangswand 2 des Gehäuses 1 sind bei der dargestellten Ausführungsform zwei Kanäle 23 vorgesehen, die mit ihrer Längserstreckung parallel zur Symmetrieachse S liegen und um diese Symmetrieachse S um 180° versetzt sind. Jeder Kanal 23, der zum Abführen des verbrauchten Filtermediums dient, besitzt an seiner radial innen liegenden Seite in Richtung der Symmetrieachse S übereinander mehrere, jeweils an ihrer Oberseite offene und sich nach oben hin trichterartig erweiternde Fangtaschen 24, die in den zugehörigen Kanal 23 münden. Die Anzahl der Fangtaschen 24 an jedem Kanal 23 ist gleich der halben Anzahl der Behandlungsräume 5 bzw. der Wände 18. Weiterhin ist jede Fangtasche 24 an jedem Kanal 23 unterhalb einer Wand 19 vorgesehen und reicht mit ihrem radial innen liegenden Rand etwas weiter radial nach innen als der äußere ringförmige Rand der zugehörigen Wand 9. Oberhalb jeder Fangtasche 24 ist ein sichelartiger Abstreifer 25 vorgesehen, der auch oberhalb der Oberseite einer Wand 9 angeordnet ist und bis in den oberhalb dieser Wand 19 gebildeten Filterraum bzw. in das dort vorhandene Filtermedium hineinreicht.

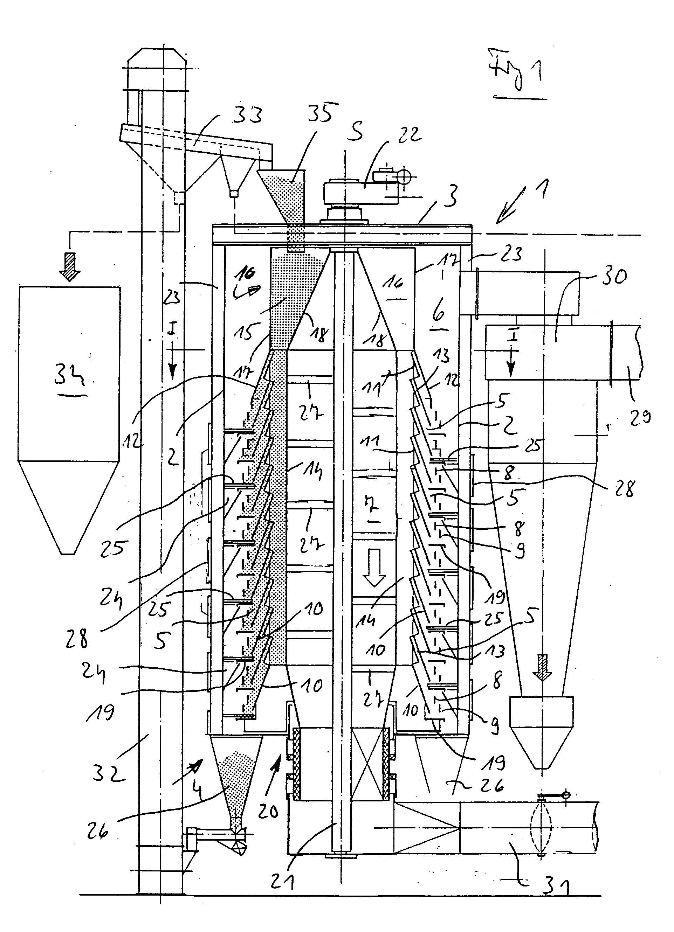

Die unteren Enden der Kanäle 23 münden jeweils in einen an der Oberseite offenen und sich nach oben hin trichterartig erweiternden Auffangbehälter 26, der an seiner Oberseite zur Kammer 6, nicht jedoch zur Kammer 7 hin offen ist. Bei der dargestellten Ausführungsform übernimmt der in der Fig. 1 linke Auffangbehälter 26 auch die Funktion einer Fangtasche 24 für den untersten Abstreifer 25. Weiterhin ist bei der dargestellten Ausführungsform die Anordnung so getroffen, daß jedem Behandlungsraum 5 bzw. jeder Wand 19 jeweils nur ein Abstreifer 25 zugeordnet ist, wobei die Abstreifer 25 und die zugehörigen Fangtaschen 24 an den beiden Kanälen 23 jeweils um den axialen Abstand gegeneinander versetzt sind, die die Wände 19 voneinander aufweisen.

Wie in der Fig. 1 in der linken Hälfte dargestellt ist, verteilt sich das Behandlungsmedium 15 auf den Vorratsbehälter 16 über die Kanäle 14 und die Kanäle 13 auf die Einzelbehandlungsräume 5 derart, daß diese vollständig mit dem Filtermedium gefüllt sind. Wie die Fig. 1 weiterhin zeigt, steht mit Ausnahme des untersten Behandlungsraumes 5 jeder Behandlungsraum mit dem jeweils darunter liegenden Behandlungsraum 5 durch eine zwischen dem unteren Rand einer Wand 10 und dem inneren Rand einer Wand 19 gebildeten Öffnung in Verbindung. Weiterhin weist jeder Filterraum in seinem oberen Bereich eine radial innen liegende ringförmige Öffnung 27 auf, die zwischen dem unteren Rand einer Wand 11 und dem oberen Rand einer Wand 10 gebildet ist. Neben diesen inneren, d. h. zur inneren Kammer 7 hin offenen und jeweils nur durch die Kanäle 14 unterbrochenen ringförmigen Öffnungen 27 besitzt jeder Filterraum 5 auch radial außen liegende Öffnungen zur äußeren Kammer 6, und zwar im Bereich des oberen und unteren Randes der Wände 8 und 9.

Das dargestellte Filter besitzt weiterhin eine Vielzahl von durch Klappen 28 verschlossene Inspektionsöffnungen. Diese Inspektionsöffnungen sind zum Teil an den Kanälen 23 im Bereich jeweils eines Abstreifers 25 bzw. einer Fangtasche 24 vorgesehen, teilweise aber auch an der Umfangswand 2, an der die Kanäle 23, die Abstreifer 25 und die Fangtaschen 24 fest angeordnet sind. Durch Öffnen der Klappen 28 ist es möglich, auch während des Betriebes die Funktion des Filters zu überprüfen sowie eventuelle Störungen im Fluß des Behandlungsmediums insbesondere auch im Bereich der Abstreifer 25 und der Fangtaschen 24 von außen her zu beheben.

Das zu reinigende Gas wird der äußeren Kammer 6 des Filters über einen Rohgaskanal 29 und einem Vorabscheider 30 zugeführt und durchströmt die einzelnen Behandlungsräume 5 bzw. das dort vorhandene Behandlungsmedium 15 von unten nach oben, wobei das zu reinigende Gas in die Behandlungsräume 5 durch die im Bereich des unteren und oberen Randes der Wände 9 gebildeten Öffnungen in die einzelnen Behandlungsräume 5 eintritt. Das behandelte, d. h. gereinigte Gas verläßt die Filterräume an den inneren Öffnungen 27, d. h. gelangt durch diese Öffnung in die innere Kammer 7 und wird über diese Kammer über einen Reingas-Kanal 31 abgeführt. Wie aus der Fig. 1 ersichtlich ist, erfolgt das Einleiten des Rohgases in die äußere Kammer 6 im oberen Bereich des Gehäuses 1, während das Abführen des gereinigten Gases an der Unterseite der inneren Kammer 7 erfolgt. Dadurch, daß das zu reinigende Gas der äußeren Kammer 6 zugeführt wird und die innere Kammer 7 den Reingasraum bildet und damit das zu reinigende Gas die Behandlungsräume 5 nicht nur von unten nach oben, sondern auch radial von außen nach innen durchströmt, ergibt sich eine Verringerung des wirksamen Strömungsquerschnittes in den einzelnen Behandlungsräumen mit zunehmendem Reinigungsgrad des Gases, was zu einer optimalen Arbeitsweise des Filters entscheidend beiträgt.

Während des Betriebs des Filters wird mit Hilfe des Antriebs 22 der Rotor 20 kontinuierlich oder aber schrittweise oder diskontinuierlich durch Ein- und Ausschalten des Antriebs 22 um die Symmetrieachse S gedreht, wobei mit Hilfe der Abstreifer 25 aus dem unteren Bereich jedes Behandlungsraumes 5 dort vorhandenes Filtermedium über die Fangtasche 24 und den Kanal 23 in den Auffangbehälter 26 oder aber direkt in diesen eingebracht wird, wobei mit jedem Entfernen von verbrauchten Behandlungsmedium frisches, unverbrauchtes Behandlungsmedium 15 von oben her aus dem Vorratsbehälter 16 und die Kanäle 13 und 14 nach unten in die Behandlungsräume 5 nachfließt. Durch die versetzte Anordnung der Abstreifer 25 in der Weise, daß diese Abstreifer 25 an den beiden Kanälen 23 jeweils um den axialen Abstand zweier Wände 19 versetzt sind, ist es nicht nur möglich, bei vorgegebener axialer Höhe der Behandlungsräume 5 die Fangtaschen 24 relativ groß auszubilden, was für ein einwandfreies Abführen des verbrauchten Behandlungsmediums von Vorteil ist, sondern durch die Versetzanordnung der Abstreifer 25 an den beiden Kanälen 23 wird auch eine übermäßige Beunruhigung des Behandlungsmedium 15 in den Behandlungsräumen 5 durch die Abstreifer 25 vermieden, da durch die versetzte Anordnung der Abstreifer 25 zwischen zwei wirksamen Abstreifern wenigstens ein Behandlungsraum 5 vorhanden ist, dessen Behandlungsmedium 15 nicht durch einen Abstreifer 25 beunruhigt ist. Durch die Vermeidung einer übermäßigen Beunruhigung des Behandlungsmediums 15 wird insbesondere vermieden, daß sich im Bereich der Behandlungsräume 5 im Behandlungsmedium 15 Kanäle bilden, durch die das zu behandelnde bzw. zu reinigende Gas hindurchströmen kann, ohne daß es zu der gewünschten Filterwirkung kommt. Dadurch, daß die Behandlungsräume 5 Teil des um die Symmetrieachse S sich drehenden Rotors 20 sind, während die Abstreifer 25 nicht um die Symmetrieachse S umlaufend angeordnet sind, wird durch die Abstreifer 25 jeder Behandlungsraum 5 an seinem gesamten Umfang erfaßt. Durch die rotierende Ausbildung der Filterräume 5 ist es auch möglich, die Kammer 6 zum Zuführen des Rohgases außen und die Kammer 7 zum Abführen des gereinigten Gases innen vorzusehen.

Das verbrauchte Behandlungsmedium wird jeweils in den Sammelbehältern 26 gesammelt und gelangt über eine Fördereinrichtung, die als in vertikaler Richtung förderndes Element auch ein Becherwerk 32 aufweist, an einem Schwingsieb 33, mit welchem aus dem verbrauchten Behandlungsmedium 15 Staubpartikel usw. ausgeschieden und einen Staubfänger 34 zugeführt werden. Das somit gereinigte und damit frische Behandlungsmedium wird einem Beschickungstrichter 35 zugeführt, der mit seinem unteren, offenen Ende in das obere, offene Ende des Vorratsbehälters 16 hineinreicht. Da auch der Vorratsbehälter 16 Teil des Rotors 20 ist, wird das Behandlungsmedium 15 mit Hilfe des Aufgabetrichters 35 gleichmäßig im Vorratsbehälter 16 verteilt.

## Patentansprüche

1. Vorrichtung zum Behandeln von Substanzen in einem Gasstrom, insbesondere zur Absorption und/oder Adsorption oder zum Filtern von Gasen mit einer ersten Kammer (6) zum Zuführen eines Gases, mit einer zweiten Kammer (7) zum Abführen des Gases und mit mehreren in Richtung einer Achse (S) übereinander angeordneten und zwischen der ersten und zweiten Kammer liegenden ringförmigen Behandlungsräumen (5), die durch Wände (8 - 12) gegeneinander sowie gegen die erste und zweite Kammer (6, 7) begrenzt sind und jeweils wenigstens eine obere Einlaßöffnung (13) für ein aus festen Partikeln bestehendes Behandlungsmedium (15) im oberen Teil und wenigstens eine untere Auslaßöffnung für das Behandlungsmedium (15) im unteren Teil besitzen, wobei jedem Behandlungsraum (5) an der oberen Einlaßöffnung über einen Kanal (14) frisches, gereinigtes und/oder wiederaufbereitetes Behandlungsmedium zuführbar und an der unteren in die erste Kammer (6) mündenden Auslaßöffnung jedes Behandlungsraumes (5) eine Abräumvorrichtung (25) zum Abführen des Behandlungsmediums vorgesehen ist, wobei die Behandlungsräume (5) mit der ersten Kammer (6) für einen Gaseintritt und mit der zweiten Kammer für einen Gasaustritt in Verbindung stehen, wobei die Behandlungsräume (5) bzw. die diese Behandlungsräume (5) begrenzenden Wände (8 - 12) Teil einer um die Achse (S) drehbar gelagerten und rotierend angetriebenen rotorartigen Einheit (20) sind, dadurch gekennzeichnet, daß die äußere Kammer die erste Kammer (6) und die innere Kammer die zweite Kammer (7) sind, daß die Abräumvorrichtungen (25) für ein Abführen des Behandlungsmediums (15) aus den Behandlungsräumen (5) bezogen auf die Achse (S) radial nach außen ausgebildet sind, und daß der wenigstens eine Kanal (14) zum Zuführen von frischem, gereinigtem und/oder wiederaufbereitetem Behandlungsmedium ebenfalls Teil der rotierend angetriebenen Einheit (20) ist.

2. Vorrichtung nach Anspruch 1, dadurch gekennzeichnet, daß in einer die erste Kammer (6) radial nach außen begrenzten Umfangswand (2) und/oder an einem mit den Fangtaschen (24) in Verbindung stehenden Kanal (23) zum Abführen des Behandlungsmediums (15) wenigstens eine Inspektionsöffnung vorgesehen ist, die mittels eines Verschließelementes, beispielsweise mittels einer Klappe (28) öffenbar bzw. verschließbar ist.

3. Vorrichtung nach Anspruch 1 oder 2, dadurch gekennzeichnet, daß der wenigstens eine Kanal zum Zuführen von frischem, gereinigtem und/oder wiederaufbereitetem Behandlungsmedium (15) wenigstens einen sich in Richtung der Achse (S) erstreckenden Schacht oder Kanalabschnitt (14), der mit den Behandlungsräumen (5) in Verbindung steht, sowie einen oberhalb der Behandlungsräume (5) vorgesehenen Vorratsbehälter (16) für das Behandlungsmedium (15) umfaßt, mit dem der wenigstens eine Kanalabschnitt (14) verbunden ist.

4. Vorrichtung nach einem der Ansprüche 1 bis 3, gekennzeichnet durch den Abräumvorrichtungen (25) zugeordnete Fangtaschen (24), die bezogen auf die Achse (S) radial außerhalb der rotorartigen Einheit (20) vorgesehen sind.

5. Vorrichtung nach einem der Ansprüche 1 bis 4, dadurch gekennzeichnet, daß die Abräumvorrichtungen jeweils von wenigstens einem Abstreifer (25) gebildet sind, der von einem bezogen auf die Achse (S) radial außerhalb der rotorartigen Einheit (20) liegenden Bereich an jeweils eine Auslaßöffnung eines Behandlungsraumes (5) reicht.

6. Vorrichtung nach einem der Ansprüche 1 bis 5, dadurch gekennzeichnet, daß die Abräumvorrichtungen (25) zweier in der Achse (S) aufeinander folgender Behandlungsräume (5) um die Achse (S) um einen Winkelbetrag versetzt sind.

7. Vorrichtung nach Anspruch 6, dadurch gekennzeichnet, daß wenigstens zwei Gruppen von Abräumvorrichtungen (25) vorgesehen sind, daß in jeder Gruppe die Abräumvorrichtungen (25) in der Achse (S) gegeneinander versetzt sind, und daß zwei benachbarte Abräumvorrichtungen (25) einer Gruppe Behandlungsräume (5) zugeordnet sind, zwischen denen in der Achse (S) wenigstens ein weiterer Behandlungsraum (5) vorgesehen ist, dem eine Abräumvorrichtung (25) der wenigstens einen anderen Gruppe von Abräumvorrichtungen zugeordnet ist.

8. Vorrichtung nach einem der Ansprüche 1 bis 7, dadurch gekennzeichnet, daß das Gas der ersten Kammer (6) im oberen Bereich der Vorrichtung zuführbar ist.

9. Vorrichtung nach einem der Ansprüche 1 bis 8, dadurch gekennzeichnet, daß das Gas aus der zweiten Kammer (7) in deren unteren Bereich abführbar ist.

## Claims

1. Apparatus for treating substances in a gas stream, in particular for the absorption and/or adsorption or the filtering of gases with a first chamber (6) for the supply of a gas, with a second chamber (7) for the drawing off of the gas and with several ring-like treatment areas (5) arranged one above the other between the first and second chambers in the direction of an axis (S) being delimited with respect to one another as well as with respect to the first and second chambers (6,7) by walls (8-12) and each having at least an upper inlet (13) for a treatment medium (15) consisting of solid particles in the upper part and at least a lower outlet for the treatment medium (15) in the lower part, whereby each treatment area (5) is suppliable at the upper inlet via a channel (14) with fresh purified and/or recycled treatment medium and at the lower outlet of each treatment space (5) leading into the first chamber (6) a removal device (25) to draw off the treatment medium is provided, whereby the treatment spaces (5) remain in connection with the first chamber (6) for a gas inlet and with the second chamber for a gas outlet, whereby the treatment spaces (5) or the walls (8-12) delimiting these treatment spaces (5) are part of a bearing mounted and rotary driven rotor-like unit (20) rotatable around an axis (S) characterised in that the outer chamber is the first chamber (6) and the inner chamber is the second chamber (7), that the removal devices (25) to draw off the treatment medium (15) from the treatment areas (5) are formed radially towards the outside with respect to the axis (S) and that the at least one channel (14) for the supply of fresh purified and/or recycled treatment medium is likewise a part of the rotary driven unit (20).

2. Apparatus according to claim 1 characterised in that in a perimeter wall (2) delimiting the first chamber (6) radially toward the outside and/or at a channel (23) remaining in connection with a collecting pocket (24) for the drawing off of the treatment medium (15) at least an inspection opening is provided, which by means of a closure element, for example by means of a flap (28), may be opened or closed.

3. A device according to claims 1 or 2 characterised in that the at least one channel for the supply of fresh, purified and/or recycled treatment medium (15) comprises at least a shaft extending in the direction of the axis (S) or a channel portion (14) which remains in contact with the treatment areas (5) as well as a reservoir (16) for the treatment medium (15) provided above the treatment areas (5) which is connected with the at least one channel section (14).

4. Apparatus according to one of claims 1 to 3 characterised in that the collection pockets (24) corresponding to the removal devices (25) are provided radially outside the rotor-like unit (20) with respect to the axis (S).

5. Apparatus according to one of claims 1 to 4 characterised in that the removal devices are each formed from at least a shedder (25) which each extend from an area located radially outside the rotor-like unit (20) with respect to the axis (S) to an outlet of a treatment area (5).

6. Apparatus according to one of claims 1 to 5 characterised in that the removal devices (25) of two treatment areas (5) following one another in the axis (S) are displaced by an angle around the axis (S).

7. Apparatus according to claim 6 characterised in that at least two groups of removal devices (25) are provided, that in each group the removal devices (25) are displaced in the axis (S) with respect to one another and that two neighbouring removal devices (25) are allocated to a group of treatment areas (5), between which in the axis (S) at least a further treatment area (5) is provided, which is allocated a removal device (25) of at least another group of removal devices.

8. Apparatus according to one of claims 1 to 7 characterised in that the gas is suppliable to the first chamber (6) in the upper area of the apparatus.

9. Apparatus according to one of claims 1 to 8 characterised in that the gas is removable from the second chamber (7) in the lower area.

## Revendications

1. Dispositif pour traiter des substances dans un courant gazeux, notamment pour l'absorption et/ou l'adsorption ou pour le filtrage de gaz avec une première chambre (6) pour l'admission d'un gaz, avec une deuxième chambre (7) pour l'évacuation du gaz et avec plusieurs compartiments de traitement (5) de forme annulaire, disposés de façon superposée dans le sens d'un axe (S) et situés entre la première chambre et la deuxième chambre, qui sont limités par des parois (8 - 12) les uns par rapport aux autres ainsi que par rapport à la première chambre et à la deuxième chambre (6, 7) et ont au moins un orifice d'admission (13) supérieur pour un agent de traitement (15) composé de particules solides dans la partie supérieure et au moins un orifice d'évacuation inférieur pour l'agent de traitement (15) dans la partie inférieure, de l'agent de traitement frais, nettoyé et/ou retraité pouvant être amené par un conduit (14) à chaque compartiment de traitement (5) sur l'orifice d'admission supérieur et un dispositif de déblaiement (25) pour l'évacuation de l'agent de traitement étant prévu sur l'orifice d'évacuation inférieur de chaque compartiment de traitement (5) débouchant dans la première chambre (6), les compartiments de traitement (5) étant en liaison avec la première chambre (6) pour une entrée de gaz et avec la deuxième chambre pour une sortie de gaz, les compartiments de traitement (5) et les parois (8 - 12) délimitant ces compartiments de traitement (5) étant une partie d'une unité (20) du type rotor montée de façon à pouvoir tourner autour de l'axe (S) et entraînée par rotation, caractérisé en ce que la chambre extérieure et la chambre intérieure sont respectivement la première chambre (6) et la deuxième chambre (7), en ce que les dispositifs de déblaiement (25) pour une évacuation de l'agent de traitement (15) hors des compartiments de traitement (5) sont conçus radialement vers l'extérieur par rapport à l'axe (S), et en ce que au moins le conduit (14) pour l'arrivée d'agent de traitement frais, nettoyé et/ou retraité fait également partie de l'unité (20) entraînée par rotation.

2. Dispositif selon la revendication 1, caractérisé en ce que dans une paroi périphérique (2) délimitant la première chambre (6) radialement vers l'extérieur et/ou sur un conduit (23) en liaison avec les poches d'interception (24), il est prévu pour l'évacuation de l'agent de traitement (15) au moins un orifice d'inspection qui peut être ouvert ou fermé au moyen d'un élément d'obturation, par exemple au moyen d'un clapet (28).

3. Dispositif selon la revendication 1 ou 2, caractérisé en ce que au moins le conduit pour l'évacuation d'agent de traitement (15) frais, nettoyé et/ou retraité comprend au moins une goulotte ou un tronçon de conduit s'étendant dans le sens de l'axe (S) qui est en liaison avec les compartiments de traitement (5) et un réservoir de stockage (16) prévu au-dessus des compartiments de traitement (5) pour l'agent de traitement (15) avec lequel est relié au moins un tronçon de conduit.

4. Dispositif selon l'une des revendications 1 à 3, caractérisé par des poches d'interception (24) affectées aux dispositifs de déblaiement (25) qui sont prévues radialement par rapport à l'axe (S) à l'extérieur de l'unité (20) du type rotor.

5. Dispositif selon l'une des revendications 1 à 4, caractérisé en ce que les dispositifs d'évacuation sont formés chacun d'au moins un racleur (25) qui part d'une zone située radialement par rapport à l'axe (S) à l'extérieur de l'unité (20) du type rotor et va jusqu'à un orifice d'évacuation d'un compartiment de traitement (5).

6. Dispositif selon l'une des revendications 1 à 5, caractérisé en ce que les dispositifs de déblaiement (25) de deux compartiments de traitement (5) se succédant dans l'axe (S) sont décalés d'une quantité angulaire autour de l'axe.

7. Dispositif selon la revendication 6, caractérisé en ce que au moins deux groupes de dispositifs de déblaiement (25) sont prévus, en ce que dans chaque groupe les dispositifs de déblaiement (25) sont décalés dans l'axe (S) l'un par rapport à l'autre, et en ce que deux dispositifs d'évacuation (25) voisins sont affectés à un groupe de compartiments de traitement (5) entre lesquels il est prévu dans l'axe (S) au moins un autre compartiment de traitement (5) auquel est affecté un dispositif de déblaiement (25) d'au moins un autre groupe de dispositifs de déblaiement.

8. Dispositif selon l'une des revendications 1 à 7, caractérisé en ce que le gaz de la première chambre (6) peut être amené dans la zone supérieure du dispositif.

9. Dispositif selon l'une des revendications 1 à 8, caractérisé en ce que le gaz sortant de la deuxième chambre (7) peut être évacué dans sa zone inférieure.
